# EUROPÄISCHE PATENTSCHRIFT

(11) **EP 0 455 251 B1**
(45) Veröffentlichungstag und Bekanntmachung des Hinweises auf die Patenterteilung: **28.09.1994**
(21) Anmeldenummer: 91107148.8
(22) Anmeldetag: 03.05.1991
(51) Int. Cl.: B60D 1/52

(54) **Abnehmbare Anhängerkupplung**
Dismountable trailer coupling device
Attelage de remorque démontable

(30) Priorität: 04.05.1990 DE 9005050 U
(43) Veröffentlichungstag der Anmeldung: 06.11.1991
(73) Patentinhaber: AL-KO KOBER AG, D-89359 Kötz (DE)
(72) Erfinder: Korger, Heinz, Dipl.-Ing., W-7908 Niederstotzingen (DE)
(74) Vertreter: Ernicke, Hans-Dieter, Dipl.-Ing.

(56) Entgegenhaltungen:
- EP-A- 0 151 099
- EP-A- 0 231 551
- DE-A- 1 780 472
- DE-A- 2 935 385
- FR-A- 2 390 304
- FR-A- 2 450 167

## Beschreibung

Die Erfindung betrifft eine abnehmbare Anhängerkupplung mit den Merkmalen im Oberbegriff des Hauptanspruches.

Eine solche abnehmbare Anhängerkupplung ist aus der EP-0 231 551 bekannt. Die Kupplungsstange ist hier am Ende abgewinkelt und mit einem Kegel versehen. Sie wird von unten in ein ebenfalls kegeliges Aufnahmerohr eingesetzt und mit einem beweglichen Sperrbolzen verriegelt. Der Sperrbolzen wird von einem Hebelmechanismus betätigt und greift durch den Mantel des Aufnahmerohres. Die Bedienung dieser Anhängerkupplung ist umständlich, mühsam und auch nicht völlig sicher. Das Aufnahmerohr hat außerdem einen Längsschlitz, in dem der Sperrbolzen mit einem am Stangenende angesetzten Lagerteil geführt ist. Der Schlitz muß eine entsprechend große Öffnungsweite haben, was die Festigkeit des Aufnahmerohres verringert.

Die DE-OS 30 33 955 zeigt ebenfalls eine abnehmbare Anhängerkupplung, bei der die Kupplungsstange allerdings horizontal in das Aufnahmerohr gesteckt wird. Auch hier besitzt das Aufnahmerohr einen Längsschlitz, durch den der an der Kupplungsstange befindliche querliegende Sperrbolzen eingeführt wird. Der Sperrbolzen besitzt eine Schaftverdickung, die beim Einschrauben formschlüssig in eine entsprechende Erweiterung des Längsschlitzes am Aufnahmerohr greift. Zur Sicherung gegen Verlust ist ein Federbügel vorgesehen, der in eine Ringnut am Sperrbolzen eingreift und durch Formschluß ein Herausdrehen des Sperrbolzens verhindert. Der Sperrbolzen kann sich aber durch Erschütterungen im Fahrbetrieb ein Stück losdrehen, wodurch seine Klemmwirkung und der feste Sitz der Kupplungsstange im Aufnahmerohr beeinträchtigt werden können. Die vorbekannte Anhängerkupplung kann auch Bedienungs- und Montageprobleme bei schlechtzugänglichen und nicht vollständig sichtbaren Einbaulagen am Fahrzeugheck mit sich bringen. Um die Kupplungsstange zu montieren und den Sperrbolzen in korrekten Eingriff mit dem Aufnahmerohr zu bringen, sollte der Bediener freie Sicht haben. Außerdem benötigt er beide Hände.

Es ist Aufgabe der vorliegenden Erfindung, eine abnehmbare Aufhängerkupplung aufzuzeigen, die wirtschaftlich und betriebssicher ist sowie eine schnelle und einfache Montage der Kupplungsstange zuläßt.

Die Erfindung löst diese Aufgabe mit einer Kupplungsstange entsprechend den Merkmalen des Hauptanspruches.
Es ist eine Sicherungsvorrichtung vorgesehen, die direkt auf den Sperrbolzen oder seinen Betätigungsgriff einwirkt. Sie hält bei gelöster Kupplung den Sperrbolzen in der Kupplungsstange. Bei angesetzter Kupplung sorgt sie für einen sicheren Sitz der Kupplungsstange im Aufnahmerohr. Ein unbeabsichtigtes Lösen durch Erschütterungen im Fahrbetrieb oder dgl. wird mit Sicherheit verhindert.

In den Unteransprüchen sind verschiedene vorteilhafte Ausgestaltungen der Sicherungsvorrichtung angegeben, die einen sicheren Halt des Sperrbolzens in der Einsteckstellung, wie auch bei der Montage ermöglichen. Die Sicherungsvorrichtung rastet durch ihre besondere Gestaltung beim Einstecken der Kupplungsstange und bei Betätigung des Sperrbolzens selbsttätig ein. Die Sicherungsvorrichtung dient auch zur Bildung einer besonders sicheren und leicht zu handhabenden Anhängerkupplung. Die korrekte Montage läßt sich dabei optisch kontrollieren.

Die Eintrittsöffnung des Sperrbolzens auf der Kupplungsstange ist so weit zurückversetzt, daß sie sich bei eingesteckter Kupplungsstange außerhalb des Aufnahmerohres befindet. Auf die Anordnung eines Schlitzes im Aufnahmerohr kann dadurch verzichtet werden, was einerseits die Festigkeit erhöht und andererseits durch den verminderten Bearbeitungsaufwand die Anhängerkupplung insgesamt kostengünstiger macht. Die Kupplungsstange läßt sich dadurch sehr leicht einsetzen, was auch bei verborgener Anordnung des Aufnahmerohres an schlecht zugänglichen und kaum einsehbaren Stellen möglich ist. Die Montage kann ferner mit einer Hand erfolgen.

Für die Führung, Betätigung und Gestaltung des Sperrbolzens ergeben sich mehrere vorteilhafte Varianten. Ein gleitend geführter und federbelasteter Sperrbolzen kann zum Lösen und Einsetzen der Kupplungsstange besonders schnell betätigt werden. Er bewegt sich ferner von selbst in Eingriff mit der Rastöffnung im Aufnahmerohr, was die Betriebsicherheit erhöht. Ein besonders fester Sitz der Kupplungsstange im Aufnahmerohr läßt sich über eine verbesserte Spannfunktion des mit einer Kegelspitze, einer einseitigen Anschrägung oder einem Exzenterkopf ausgerüsteten Sperrbolzens erreichen. Die freiliegende Eintrittsöffnung und der offen zugängliche Sperrbolzen ermöglichen ferner besonders praktische und vorteilhafte Ausgestaltungen der Sicherungsvorrichtung.

Es empfiehlt sich für eine komfortable Einhandbedienung der Anhängerkupplung eine stirnseitige Anschrägung am Aufnahmerohr anzuordnen. Ein gleitend gelagerter Sperrbolzen kann hieran aufgleiten, sich dabei automatisch zurückziehen und dann selbstätig wieder in die Rastöffnung greifen und verriegeln. Zugleich wird automatisch die Sicherungsvorrichtung aktiviert.

Für einen auch über eine längere Benutzungsdauer absolut sicheren und wackelfreien Halt der Kupplungsstange im Aufnahmerohr ist eine querliegende Spannstange vorgesehen, die unter der Vorschubwirkung des Sperrbolzens mit einer Anlaufschräge am Stangenende zusammenwirkt. Verschleiß wird hierdurch automatisch kompensiert. Eine besonders gute Führung der Kupplungsstange im Aufnahmerohr, insbesondere auch gegen seitliche Belastungen, ergibt sich im weiteren durch Abflachungen am Stangenmantel. Dies ist vor allem in Verbindung mit einer gegenüberliegenden Spannstange und dem hieraus resultierenden Spann- und Anlagedruck vorteilhaft.

Aus Verschleißgründen empfiehlt es sich ferner statt einer durchgehenden zwei oder mehr getrennte Führungsflächen an der Kupplungsstange und/oder dem Aufnahmerohr anzuordnen. Sie werden vorteilhafterweise durch Ausdrehungen oder Einschnürungen gebildet, die darüberhinaus eine vorteilhafte Wirkung beim automatischen Auswurf von unkorrekt eingesetzten Kupplungsstangen entfalten.

Die abnehmbare Anhängerkupplung kann beliebige, horizontale, schräge oder vertikale Einbaulagen haben. Die besondere Konstruktion der Kupplungsstange mit dem schrägen Sperrbolzen und der rückversetzten Eintrittsöffnung ermöglicht ferner eine Verkürzung des Aufnahmerohres, was wiederum die Baugröße der gesamten Anhängerkupplung verringert. Die Anhängerkupplung eignet sich daher auch für den Einbau bei Fahrzeugen mit geringem Abstand zwischen dem Stoßfänger und dem Heckabschlußblech, wie das bei neueren Fahrzeugkonstruktionen häufiger vorkommt. Die abnehmbare Anhängerkupplung läßt sich auch einfach und billig nachrüsten und ist durch ihre Konstruktion relativ unempfindlich gegenüber Verschmutzungen.

Die Kupplungsstange ist vorzugsweise als Kugelstange für Kugelkopf-Anhängerkupplungen ausgebildet. Sie kann aber in ihrer Gestaltung variieren und an beliebige andere Kupplungssysteme angepaßt sein.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen
- Fig. 1:: eine abgebrochene Seitenansicht eines Fahrzeughecks mit abnehmbarer Anhängerkupplung,
- Fig. 2:: eine vergrößerte, detaillierte und abgebrochene Seitenansicht des Aufnahmerohres und der Kupplungsstange,
- Fig. 3:: eine Draufsicht auf diese Anordnung gemäß Pfeil III von Fig. 2,
- Fig. 4 bis 7:: Varianten der Ausbildung und Anordnung des Sperrbolzens in der Kupplungsstange zur Fig. 2,
- Fig. 8 bis 11:: eine Variante der Betätigungsvorrichtung für den Sperrbolzen mit einem Schwenkgriff in mehreren Bewegungsstellungen, jeweils in Draufsicht,
- Fig. 12:: eine Seitenansicht gemäß Pfeil XII in Fig. 10 der Betätigungsvorrichtung in Einraststellung und
- Fig. 13 bis 21:: weitere Varianten der Betätigungsvorrichtung und der Führung der Kupplungsstange im Aufnahmerohr in verschiedenen Ansichten und Bewegungsstellungen.

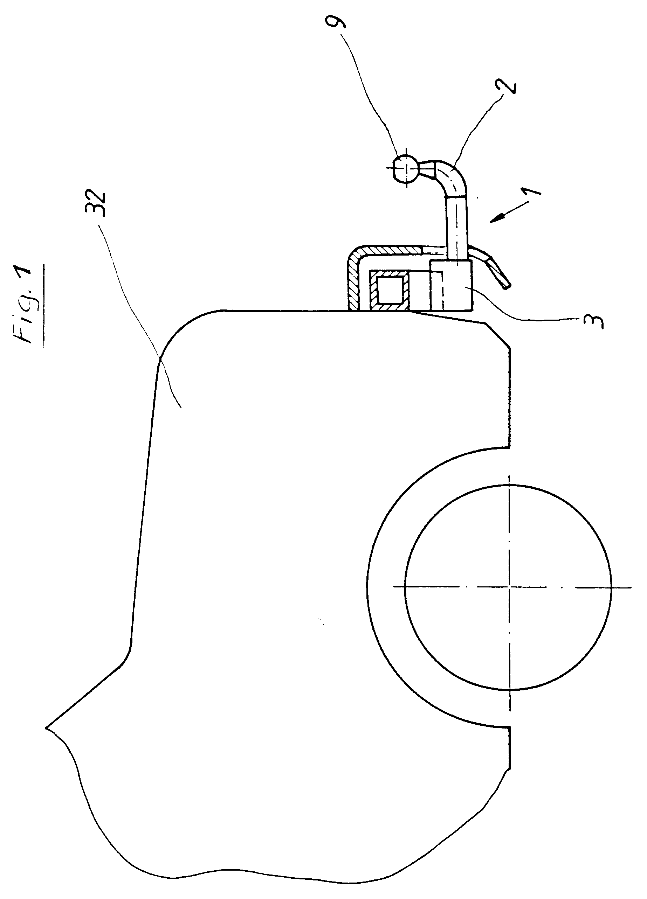

Fig. 1 zeigt in schematischer Seitenansicht die Einbaulage einer abnehmbaren Anhängerkupplung (1) am Heck eines Fahrzeugs (32). Die Anhängerkupplung (1) besteht aus einer abgewinkelten Kupplungsstange (2) und einem Aufnahmerohr (3). Die Kupplungsstange (2) trägt am einen Ende die Kupplungskugel (9) oder ein anderes Kupplungsorgan, z.B. einen Haken, ein Maul oder dgl.. Mit dem anderen Ende steckt die Kupplungsstange (2) paßgenau im Aufnahmerohr (3), das in an sich bekannter Weise am Fahrzeug über Querträger oder dergleichen befestigt ist. Im bevorzugten Ausführungsbeispiel der Fig. 1 ist das Aufnahmerohr (3) horizontal ausgerichtet, wobei auch die Kupplungsstange (2) horizontal eingesteckt wird. Alternativ kann es aber auch vertikal oder schräg angeordnet sein, wobei die Kupplungsstange (2) dann entsprechend anders gekrümmt ist.

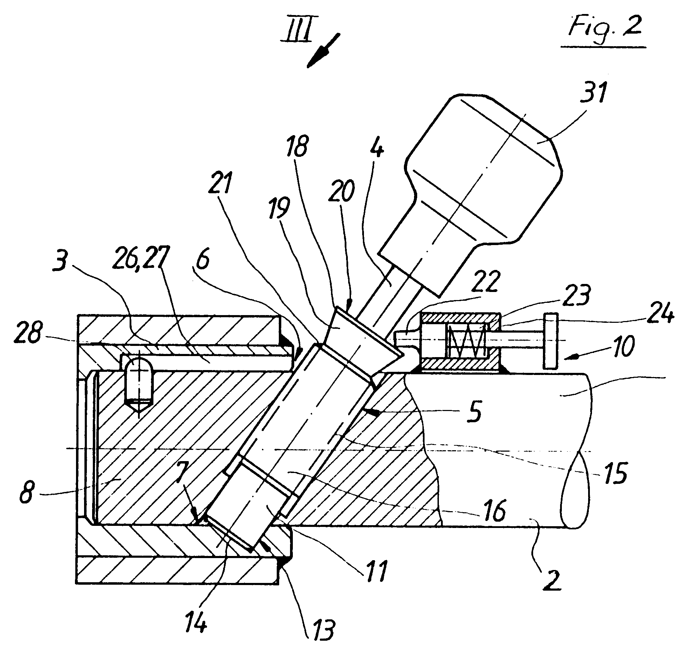

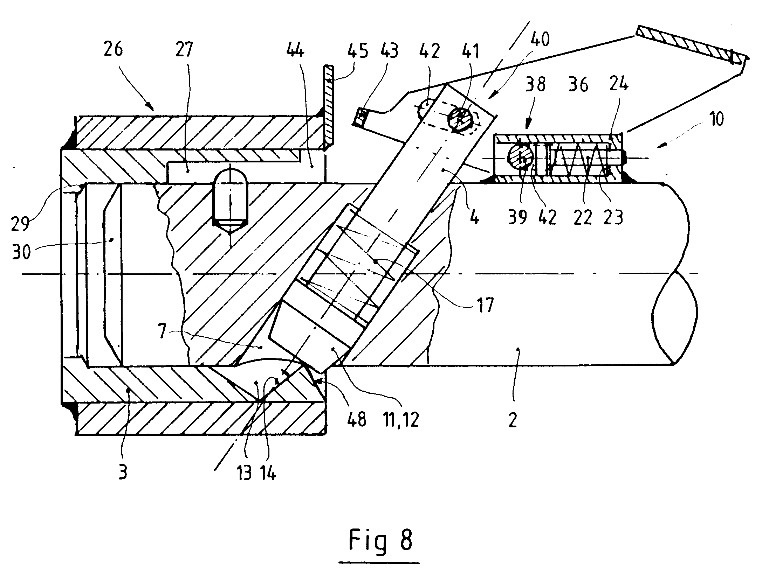

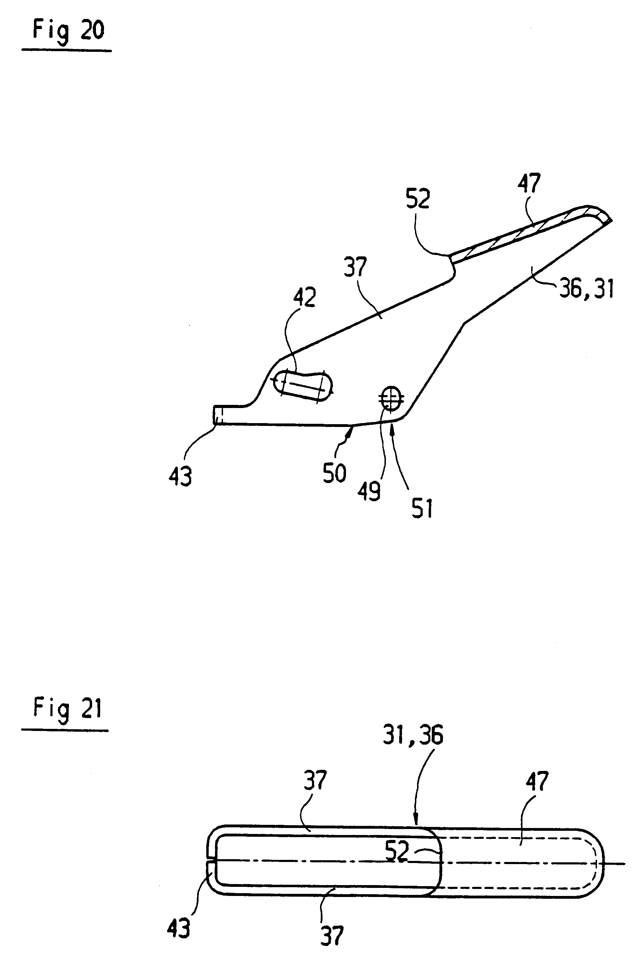

Fig. 2, 4 bis 7 sowie 10 und 12 zeigen die Kupplungsstange (2) in Einsteckstellung im Aufnahmerohr (3). Die Einsteck- oder Montagestellung wird durch einen Sperrbolzen (4) gesichert, der die Kupplungsstange (2) schräg durchsetzt und in eine Rastöffnung (13) an der Innenwand des Aufnahmerohres (3) formschlüssig eingreift und das Stangenende (8) im Aufnahmerohr (3) verspannt. Der Sperrbolzen (4) trägt am freien Ende einen Betätigungsgriff (31), mit dem er vor und zurückbewegt bzw. gedreht werden kann. In Fig. 8 bis 21 ist eine Automatik-Variante mit einem Schwenkgriff (36) dargestellt.

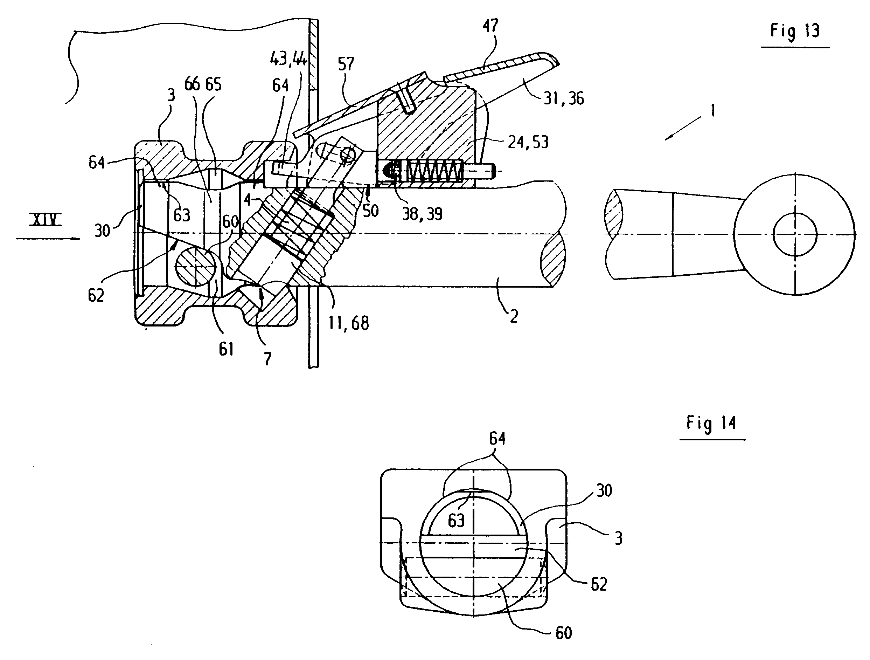

Das Aufnahmerohr (3) ist als einfaches Zylinderrohr ausgebildet, das einen massiven Mantel ohne durchgehenden Trennschlitz aufweist. An der Innenwand gegenüber der vorerwähnten Rastöffnung (13) kann allerdings eine eingearbeitete Längsnut (27) vorhanden sein. Diese bildet zusammen mit einem am Stangenende (8) angebrachten Führungsstift (28) eine Verdrehsicherung (26). Beim Einsetzen der Kupplungsstange (2) greift der Führungsstift (28) formschlüssig in die Längsnut (27). Alternativ kann die Verdrehsicherung gemäß der nachstehend erläuterten Ausführungsbeispiele Fig. 13 - 21 aus einer querliegenden Spannstange (60) in Verbindung mit einer Anlaufschräge (62) bestehen. Das Aufnahmerohr (3) hat dann keine Längsnut.

Der Sperrbolzen (4) durchsetzt die Kupplungsstange (2) schräg und nimmt dabei vorzugsweise einen Winkel von 55° zur Stangenlängsachse ein. Die Eintrittsöffnung (6) ist gegenüber der Stirnseite des Stangenendes (8) vorzugsweise so weit zurückversetzt, daß sie sich bei eingesteckter Kupplungsstange (2) gerade außerhalb des Aufnahmerohres (3) befindet. Die Austrittsöffnung (7) liegt weiter vorn und mündet im Inneren des Aufnahmerohres (3), so daß der Sperrbolzen (4) mit seinem Bolzenkopf (11) in die Rastöffnung (13) formschlüssig eingreift. Die Rastöffnung (13) ist vorzugsweise als nicht durchgehende Ausnehmung in der Rohrwand ausgebildet und befindet sich in der Nähe des Randes des Aufnahmerohres (3).

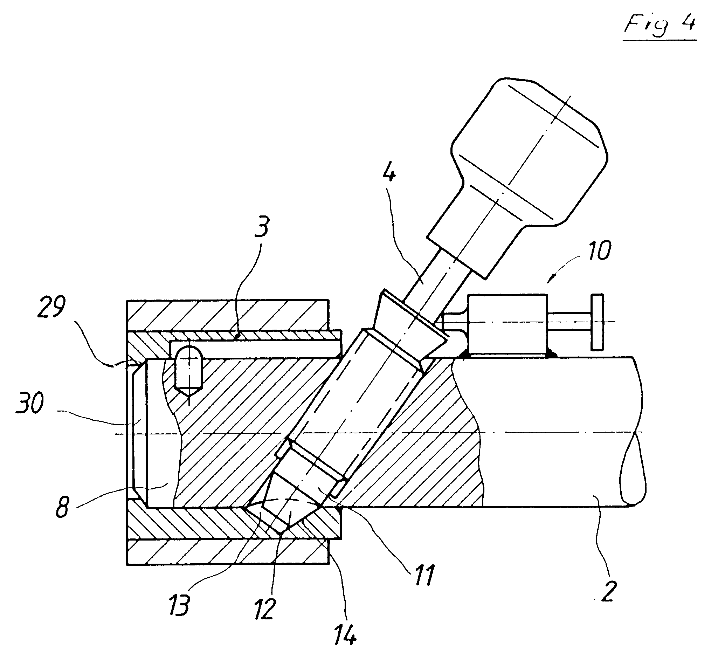

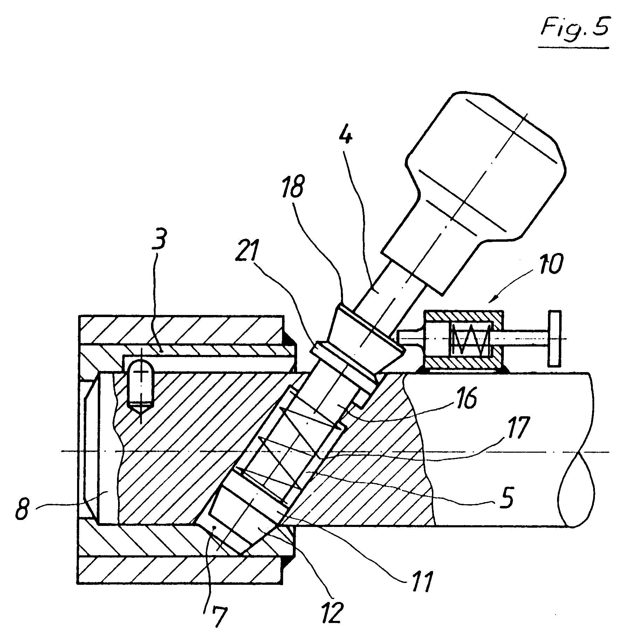

Der Sperrbolzen (4) ist in einer schrägen Bohrung (5) der Kupplungsstange (2) gelagert und geführt. Im Ausführungsbeispiel der Figuren 2 und 4 sind der Sperrbolzen (4) und die Kupplungsstange (2) durch ein Schraubgewinde (15) miteinander verbunden. In den anderen Ausführungsbeispielen der Fig. 5 bis 19 ist eine Gleitführung vorgesehen, wobei der Sperrbolzen (4) einen eingezogenen Bolzenschaft (16) und einen breiteren Bolzenkopf (11) aufweist, mit denen er in der Bohrung (5) geführt ist. Die Bohrung (5) kann entsprechend im Durchmesser abgesetzt sein und bietet Raum für die Anordnung einer Feder (17), die zwischen dem Bolzenkopf (11) und den wieder nach innen springenden Wänden der Bohrung (5) eingespannt ist. Die Feder (17) drückt den Bolzenkopf (11) aus der Austrittsöffnung (7) heraus.

Im Ausführungsbeispiel der Fig. 2 ist der gegenüber dem Gewindebereich eingezogene Bolzenkopf (11) zylindrisch gestaltet. Die Wände (14) der Rastöffnung (13) besitzen eine der Schräglage des Bolzenkopfs (11) bzw. der Bohrung (5) entsprechende Neigung, wobei der Boden rechtwinklig dazu verläuft. Beim Eindrehen des Sperrbolzens (4) stützt sich hierdurch der Bolzenkopf (11) am Boden der Rastöffnung (13) ab und verspannt das eingesteckte Stangenende (8) gegen den gegenüberliegenden Innenwandbereich des Aufnahmerohres (3). In diesem Fall besteht ein Spalt zwischen der Stirnwand des Stangenendes (8) und den mit einem kleinen Absatz eingezogenen Boden des Aufnahmerohrs (3).

In Fig. 4 und 5 besitzt der Bolzenkopf (11) eine Kegelspitze (12), die sich ebenfalls flächig an die in gleicher Richtung geneigte Wand (14) der Rastöffnung (13) anlegt. Durch die Kegelform entsteht beim Vorschub des Sperrbolzens (4) auch eine längs der Kupplungsstange (2) gerichtete Spannkraft. Das Stangenende (8) besitzt stirnseitig eine Fase (30) und wird durch die vorerwähnte längsgerichtete Spannkraft in zentrierenden und führenden Preßkontakt mit einer gleichgeneigten ringförmigen Anlagefläche (29) am eingezogenen Boden des Aufnahmerohres (3) gebracht.

Fig. 13 bis 19 zeigen hierzu eine Variante mit einem Bolzenkopf (11), der nur an der Rückseite eine Anschrägung (68) für den Vortrieb aufweist, ansonsten aber eine der Bohrung (5) entsprechende zylindrische Form hat. Mit der einseitigen und rückwärtigen Anschrägung (68) tritt der Bolzenkopf (11) beim Eintauchen mit der Wand (14) der Rastöffnung (13) in der vorbeschriebenen Weise in Eingriff. Der Bolzenkopf (11) liegt jedoch an der Vorderseite flächig an der Bohrungswand, was für eine optimale Übertragung der Spannkräfte sorgt.

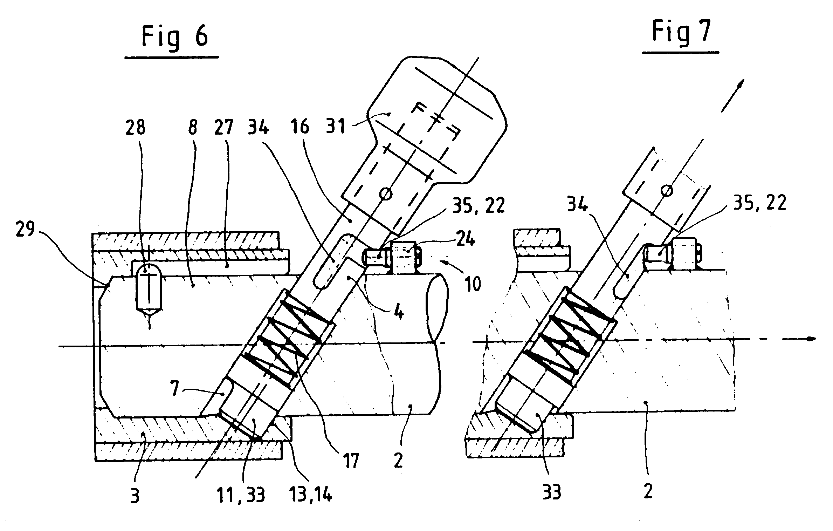

Fig. 6 und 7 zeigen eine weitere Variante mit einem federbelasteten Sperrbolzen (4), wobei ebenfalls eine axiale Verspannung des Stangenendes (8) gegen den eingezogenen Boden des Aufnahmerohres (3) angestrebt wird. Der Bolzenkopf (11) ist hier als Exzenterbolzen (33) ausgebildet. Dieser besitzt eine zylindrische Form und ist seitlich versetzt gegenüber der Längsachse des Sperrbolzens (4) angeordnet. Die Seitenwände (14) der Rastöffnung (13) erstrecken sich längs der Achse der Bohrung (5) und bilden eine Anlaufkurve für den Exzenterbolzen (33).

Fig. 7 zeigt die Lösestellung und Fig. 6 die Spannstellung. In Lösestellung ist der Achsversatz des Exzenterbolzens (33) quer oder schräg zur Längsachse der Kupplungsstange (2) ausgerichtet, wobei der Exzenterbolzen (33) an den Seitenwänden (14) der Rastöffnung (13) anliegt.
Entsprechend der Exzentrizität ist die Rastöffnung (13) ebenfalls seitlich versetzt angeordnet und besitzt eine etwas verbreiterte ovale Form. In der Lösestellung ist das Stangenende (8) noch nicht fest an die Fase (30) gepreßt. Durch Drehung des Betätigungsgriffs (31) rotiert der Sperrbolzen (4) um seine Längsachse, wodurch der Exzenterbolzen (33) einen Bogen beschreibt. Der Exzenterbolzen (33) stützt sich dabei an den Seitenwänden (14) ab und schiebt die Kupplungsstange (2) axial in die Spannstellung im Aufnahmerohr (3).

Im gezeigten Ausführungsbeispiel wird der Exzenterbolzen (33) mit einer Rechtsdrehung von ca. 90° gespannt. Zum Abnehmen der Kupplungsstange (2) wird der Sperrbolzen (4) nach links gedreht und herausgezogen. Die korrekte Drehrichtung und der Auszug des Sperrbolzens (4) werden durch einen Stift (35) gesteuert, der in eine abgewinkelte Führungsnut (34) am Bolzenschaft (16) greift. Die Führungsnut (34) besitzt einen entlang der Sperrbolzenachse sich erstreckenden geraden Längsabschnitt. Dieser geht am oberen Ende rechtwinklig in einen kürzeren Querabschnitt über, der sich in Umfangsrichtung des Bolzenschafts (16) erstreckt.

In Lösestellung gemäß Fig. 7 greift der Stift (35) in die Nutbiegung. Zum Abnehmen der Kupplungsstange (2) kann der Sperrbolzen (4) hochgezogen werden, wobei der Stift (35) im Längsabschnitt der Führungsnut (34) gleitet und den Hub begrenzt sowie den Exzenterbolzen (33) in der Lösestellung hält. Wird der Sperrbolzen (4) hingegen in die Spannstellung gemäß Fig. 6 gedreht, folgt der Stift (35) dem Querabschnitt und drückt zugleich den Sperrbolzen (4) nach unten in die Rastöffnung (13). Hierdurch wird zusätzlich eine radiale Verspannung des Stangendes (8) im Aufnahmerohr (3) entsprechend Fig. 2 und 4 erzielt. Alternativ kann der Querabschnitt sich auch in Achsrichtung des Stangenendes (8) um den Sperrbolzen (4) winden und so eine Exzenterspannung ohne Vorschub des Sperrbolzens (4) ermöglichen.

In allen Ausführungsbeispielen ist nahe der Eintrittsöffnung (6) eine Sicherungsvorrichtung (10) auf der Kupplungsstange (2) angeordnet, die ein unbeabsichtigtes Lösen des Sperrbolzens (4) verhindert und auch zur Bildung einer definierten Spannstellung des Betätigungsgriffs (31,36) bei abgenommener Kupplungsstange gemäß Fig. 13 bis 19 dienen kann.

Die Sicherungsvorrichtung (10) besteht in Fig. 1 bis 7 aus einem Hemmstift (22), der längsbeweglich in einem auf der Kupplungsstange (2) befestigten Gehäuse (24) angeordnet ist und von einer Stellfeder (23) beaufschlagt wird. Der Hemmstift (22) erstreckt sich längs der Kupplungsstange (2) und ist vorzugsweise gegenüber der Achse des Sperrbolzens (4) seitlich versetzt. Er drückt dadurch schräg gegen den geneigten Sperrbolzen (4) und sperrt dessen Lösebewegung. Der Hemmstift (22) tritt außerdem nach hinten aus dem Gehäuse (24) und trägt einen kleinen Griff, mit dem er gegen die Anpreßkraft der Feder (23) zurückgezogen werden kann.

In Fig. 2 bis 5 trägt der Sperrbolzen (4) einen radial vorspringenden Kragen (18), gegen den der Hemmstift (22) drückt. Der Kragen (18) befindet sich in der gezeigten Sperrstellung im Bereich der Eintrittsöffnung (6). Er besitzt einen kegelförmigen Mantel, der sich zum Bolzenkopf (11) hin verjüngt. Der Kragen (18) weist außerdem eine Deckfläche (20) auf, die sich quer zur Bolzenlängsachse erstreckt. In Einsteckstellung mit entsprechend weit vorgeschobenem Sperrbolzen (4) drückt der Hemmstift (22) unter Federkraft auf die Deckfläche (20) und verhindert ein Zurückziehen des Sperrbolzens (4).

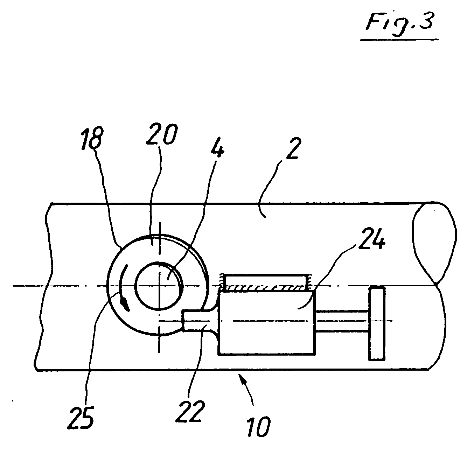

Fig. 3 verdeutlicht den vorerwähnten seitlichen Versatz des Hemmstifts (22) und des Gehäuses (24) gegenüber der Längsachse des Sperrbolzens (4). Im Ausführungsbeispiel von Fig. 2 und 4 ist das Schraubgewinde (15) rechtsgängig. In diesem Fall ist der Hemmstift (22) nach links gegenüber der Bolzenlängsachse versetzt und drückt tangential gegen die Losdrehrichtung (25) des Schraubgewindes (15) auf die Deckfläche (20). Durch die Neigung der Deckfläche (20) gegenüber dem Hemmstift (22) tritt Selbsthemmung ein, so daß sich die Schraubverbindung nicht selbsttätig lösen kann.

Im Ausführungsbeispiel der Fig. 5 mit dem durch Federkraft vorgeschobenen Sperrbolzen (4) kann der Klemmstift (22) die gleiche Lage wie in Fig. 2 und 4 haben. Alternativ kann in diesem Fall der Klemmstift (22) aber auch mittig zur Bolzenlängsachse angeordnet sein.

Wenn der Sperrbolzen (4) zur Entnahme der Kupplungsstange (2) gelöst und am Griff (31) zurückgezogen werden soll, tritt der konische Mantel (19) in Funktion. Zum Lösen der Sperrstellung wird zunächst der Hemmstift (22) zurückgezogen, der Sperrbolzen (4) dann ein Stück angehoben und mit der Deckfläche (20) am Hemmstift (22) vorbeibewegt. Wenn der Hemmstift (22) dann wieder losgelassen wird, drückt er unter Federkraft auf den konischen Mantel (19) und unterstützt die Rückzugbewegung des Sperrbolzens (4).

Der Rückzugsweg ist allerdings durch einen am verjüngten Mantelende angeordneten Ansatz (21) beschränkt, der wieder radial vorspringt. In Fig. 2 und 4 wird der Ansatz (21) durch eine Anphasung am Schraubgewinde (5) gebildet. In Fig. 5 ist eine eigene Andrehung vorhanden, die außerdem in einer speziellen Ausnehmung der Bohrung (5) noch umfangsseitig geführt ist. Die Länge des Kragens (8) in Richtung der Bolzenlängsachse ist gleich oder etwas größer als die Länge, um die der Bolzenkopf (11) aus der Austrittsöffnung (7) heraustritt und in die Rastöffnung (13) greift. Wenn der Sperrbolzen (4) also so weit zurückbewegt wird, daß der Hemmstift (22) wieder am Ansatz (21) anschlägt, ragt der Bolzenkopf (11) nicht mehr aus der Austrittsöffnung (7), so daß die Kupplungsstange (2) ohne Behinderung aus dem Aufnahmerohr (3) gezogen werden kann. Durch die Anschlagposition am Hemmstift (22) bleibt der Sperrbolzen (4) in dieser Position. Er kann nicht verloren werden und steht für eine erneute Montage der Kupplungsstange (2) automatisch in der richtigen Position.

Beim Einstecken der Kupplungsstange (2) läuft der Vorgang in umgedrehter Reihenfolge ab. Nach dem Einführen des Stangenendes (8) in das Aufnahmerohr (3) wird der Sperrbolzen (4) wieder vorgeschoben, wobei der Hemmstift (22) von Hand zurückgezogen oder durch den vorgeschobenen Mantel (19) zurückgedrängt wird. Kurz vor Erreichen der Endstellung des Sperrbolzens (4) rutscht der Hemmstift (22) über den oberen Mantelrand und drückt unter Federbelastung automatisch wieder auf die Deckfläche (22) und verhindert ein Zurückziehen des Sperrbolzens (4). Durch den außermittigen Versatz des Hemmstiftes (22) kann der mit einer Schraubverbindung (15) ausgerüstete Sperrbolzen (4) noch behinderungsfrei bis in die Endstellung gedreht werden. Eine entgegengesetzte Losdrehbewegung wird aber in jeder Drehstellung selbsttätig gehemmt.

Im Ausführungsbeispiel von Fig. 6 und 7 kann der Stift (35) für reine Führungsaufgaben starr und mittig zum Sperrbolzen (4) angeordnet sein.
Wenn diese Ausführungsform mit einer Sicherungsvorrichtung (10) ausgerüstet werden soll, ist der Führungsstift (35) in der vorbeschriebenen Weise als federbelasteter Hemmstift (22) ausgebildet, der in die Führungsnut (34) am Schaft des Sperrbolzens (4) bewegungshemmend eingreift. Außerdem weist der Querabschnitt der Führungsnut (34) eine über die Länge zunehmende Tiefe auf. Der Hemmstift (22) taucht dadurch bei der Spannbewegung immer tiefer in den Querabschnitt und muß zum Losdrehen gegen seine Federkraft zurückgeschoben werden.

Alternativ kann der Querabschnitt der Führungsnut (34) auch zumindest am freien Ende eine oder mehrere punktförmige Vertiefungen aufweisen, die als formschlüssige Rastlöcher für den Hemmstift (22) dienen. Der Querabschnitt kann im weiteren auch seinerseits gegenüber dem Längsabschnitt vertieft sein. Außerdem oder alternativ kann der Hemmstift (22) auch seitlich versetzt zum Sperrbolzen (4) angeordnet sein und dadurch gegen die Losdrehrichtung schräg auf den Nutgrund drücken.

Fig. 8 bis 19 zeigen eine weitere Variante, bei der die Sicherungsvorrichtung (10) mit der Betätigungsvorrichtung für den Sperrbolzen (4) unter Bildung einer Automatikfunktion kombiniert ist. Der Sperrbolzen (4) ist wie in den vorbeschriebenen Ausführungsbeispielen der Figuren 5 bis 7 gleitend gelagert und mit einer Feder (17) versehen, wobei der Bolzenschaft (16) aber glatt ist. Der Sperrbolzen (4) ist mit einem Schwenkgriff (36) über ein Gelenk (40) verbunden.

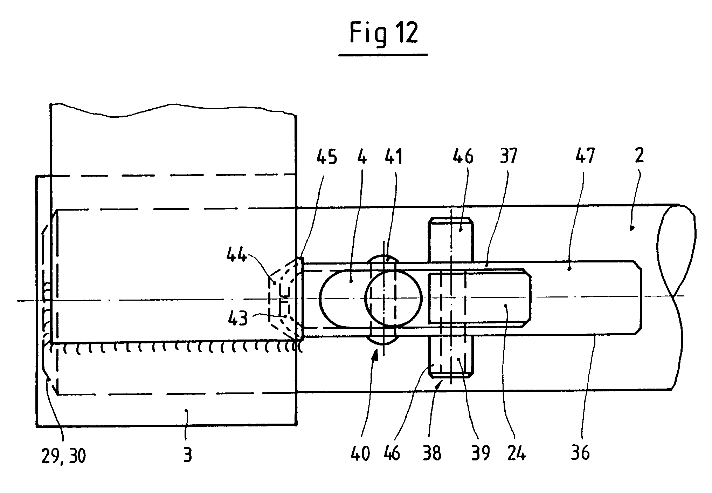

Wie Fig. 12, 20 und 21 verdeutlichen, besitzt der Schwenkgriff (36) zwei voneinander distanzierte parallele Arme (37), die sich längs der Kupplungsstange (2) erstrecken. Sie sind am rückwärtigen Ende durch eine Griffplatte (47) und am vorderen Ende über eine bügelförmige Sicherungsnase (43) miteinander verbunden. Die beiden Arme (37) umgreifen seitlich den Sperrbolzen (4), der zur Bildung des Gelenks (40) am oberen Ende einen quergerichteten Gelenkbolzen (41) aufweist. Dieser ist in zwei schrägen Langlöchern (42) der Arme (37) drehbar und querbeweglich geführt.

Der Schwenkgriff (36) ist seinerseits über ein Schwenklager (38) mit der Kupplungsstange (2) und der Sicherungsvorrichtung (10) verbunden. Er weist dazu einen quergerichteten Lagerbolzen (39) auf, der beidseits über die Arme (37) vorragt und an den Enden mit zwei Griffhülsen (46) versehen ist. Der Lagerbolzen (39) durchsetzt auch das Gehäuse (24) der Sicherungsvorrichtung (10), in dem er über Langlöcher (42) drehbar und querbeweglich geführt ist. Der federbelastete (23) Hemmstift (10) ist kolbenartig ausgebildet und drückt mit seiner Stempelfläche auf den Lagerbolzen (39) in Richtung auf das vordere Stangenende (8).

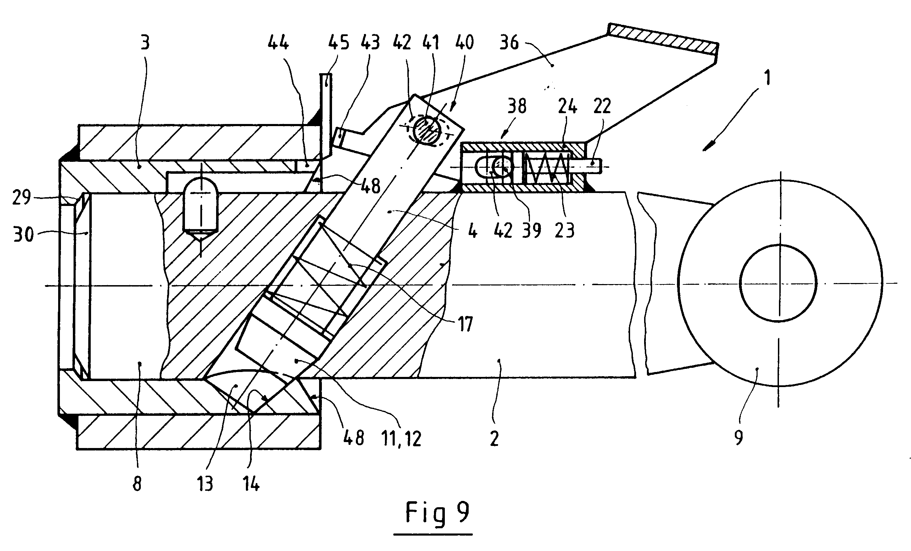

Der Schwenkgriff (36) ist seitlich an der Kupplungsstange (2) angeordnet, was Fig. 9, 13, 16, 18 und 19 in der Draufsicht auf die Kupplungskugel (9) verdeutlichen. Der Schwenkgriff (36) ist über die Langlöcher (42) verschiebbar und schwenkbar mit der Kupplungsstange (2) und dem Sperrbolzen (4) verbunden. Das Schwenklager (38) ist dabei näher an der Kupplungsstangenachse angeordnet als das Gelenk (40).

Zur Sicherung der Einsteckstellung greift der Schwenkgriff (36) mit seiner vorspringenden Sicherungsnase (43) stirnseitig in eine Ausnehmung (44) am Aufnahmerohr (3), die sich vorzugsweise im Bereich der Nut (27) der Verdrehsicherung (26) befindet. Um das Einführen zu erleichtern, ist das Aufnahmerohr (3) stirnseitig mit einer Anschrägung (48) versehen (vgl. Fig. 9), die auch als umlaufende Fase gestaltet sein kann. An der Stirnseite des Aufnahmerohrs (3) ist über der Ausnehmung (44) noch eine Platte (45) angeordnet, die ebenfalls am unteren Ende angeschrägt ist.

Fig. 8 bis 11 verdeutlicht die verschiedenen Bewegungsstellungen des Sperrbolzens (4) und des Schwenkgriffs (36), sowie der Sicherungsvorrichtung (10) beim Einsetzen beziehungsweise Abnehmen der Kupplungsstange (2).
Fig. 8 zeigt die Anfangsstellung, in der der Bolzenkopf (11) über die Anschrägung (48) beim Einsetzen der Kupplungsstange (2) aufgleitet und gegen die Kraft der Feder (17) den Schwenkgriff (36) aufklappt. Der Hemmstift (22) ist dabei eingefahren und drückt den Lagerbolzen (39) gegen das vordere Ende des Langlochs (42).

In der nächsten Position gemäß Fig. 9 ist der Bolzenkopf (11) über das Ende der Anschrägung (48) geglitten und taucht unter der Kraft der Feder (17) in die Rastöffnung (13) ein. Hierdurch wird der Schwenkgriff (36) gedreht, wobei er sich mit seiner Sicherungsnase (43) an der Platte (45) abstützt und zur Kupplungsstangenachse hin gleitet. Durch diese Abstützung wird die Sicherungsvorrichtung (10) gespannt, wobei der Hemmstift (22) ausgefahren wird und mit seinem rückwärtigen Ende aus dem Gehäuse (24) tritt. Das herausragende Ende des Hemmstiftes (22) signalisiert dem Bediener, daß die Kupplungsstange (2) noch nicht korrekt im Aufnahmerohr (3) feststeckt.

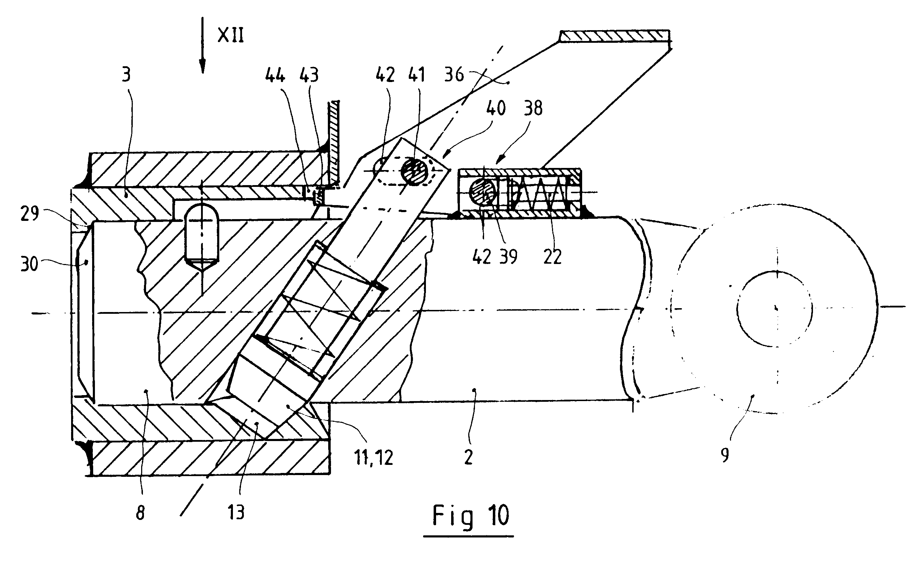

Fig. 10 zeigt die Einsteck- und Spannstellung der Kupplungsstange (2) im Aufnahmerohr (3). Der Sperrbolzen (4) ist wie im vorbeschriebenen Ausführungsbeispiel der Fig. 5 gestaltet und besitzt eine Kegelspitze (12), die mit einer entsprechend geformten Rastöffnung (13) zusammenwirkt. Sobald die Sicherungsnase (43) sich auf Höhe der Ausnehmung (44) befindet, zieht der Sperrbolzen (4) das vordere Stangenende (8) in die axiale Spannstellung im Aufnahmerohr (3). Hierbei gleitet die Sicherungsnase (43) in die Ausnehmung (44). Durch den formschlüssigen Eingriff kann der Schwenkgriff (36) nicht mehr gedreht werden. Die lineare Einfahrbewegung wird durch die Sicherungsvorrichtung (10) unterstützt, deren Hemmstift (22) den Lagerbolzen (39) nach vorn schiebt. In dieser Stellung erstrecken sich beide Langlöcher (42) im wesentlichen parallel zur Kupplungsstangenlängsachse. In der Einsteckstellung der Kupplungsstange (2) ist der Hemmstift (22) in das Gehäuse (24) eingefahren, so daß sein Ende nicht mehr vorragt. Dies signalisiert dem Bediener die korrekte Kupplungsmontage. Um die Kontrolle zu erleichtern, kann das hintere Ende des Hemmstiftes (22) mit Signalfarbe oder dergleichen optisch auffällig gestaltet sein.

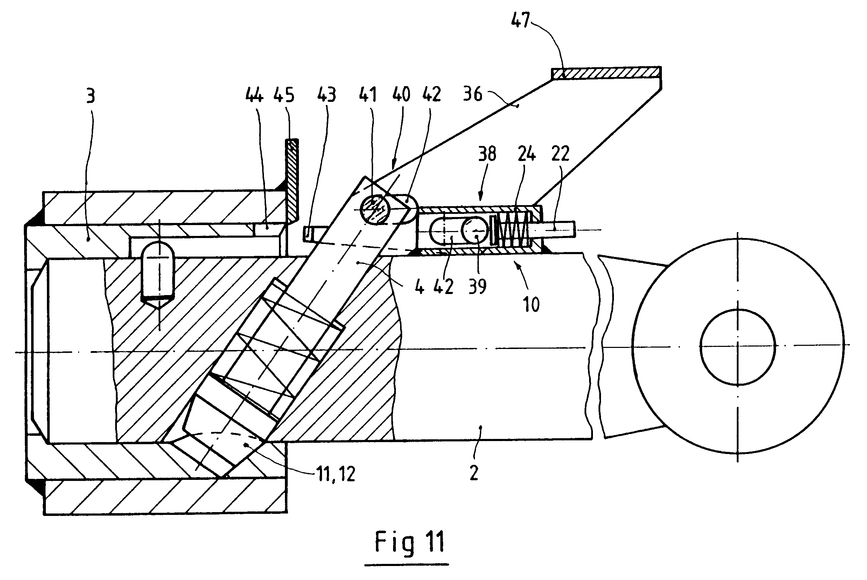

Zum Abnehmen der Kupplungsstange (2) wird gemäß Fig. 11 der Schwenkgriff (36) gegen die Kraft der Sicherungsvorrichtung (10) zurückgeschoben, bis die Sicherungsnase (43) aus der Ausnehmung (44) freikommt. Hierzu kann die Bedienungsperson auch an den seitlichen Griffhülsen (46) ziehen. Anschließend wird der Schwenkgriff (36) um das Schwenklager (38) gedreht und dadurch der Sperrbolzen (4) gelöst. Die Kupplungsstange (2) kann dann abgenommen werden.

Für die Bedienung sind im Ausführungsbeispiel der Figuren 8 bis 12 nur geringe Handkräfte erforderlich. Durch den Versatz des Schwenklagers (38) und des Gelenks (40) ergibt sich eine Hebelübersetzung, die die Handkraft positiv unterstützt. Aufgrund der seitlichen Anordnung ist der Schwenkgriff (36) gut zugänglich und mit einer Hand leicht bedienbar. Bei der Einschubbewegung der Kupplungsstange in das Aufnahmerohr (3) erfolgt die Verriegelung und Sicherung automatisch, ohne daß vorher die Sicherungsvorrichtung (10) wie in den vorbeschriebenen Ausführungsbeispielen ausgelöst werden muß.

Die gezeigten Ausführungsbeispiele können untereinander kombiniert werden. Insbesondere können die verschiedenen Betätigungsmechanismen für die Sperrbolzen (4) und die Sicherungsvorrichtungen (10) ausgetauscht und verändert werden. Der Sperrbolzen (4) kann sich ferner in einer vertikalen, horizontalen oder schrägen Ebene durch die Kupplungsstange erstrecken. Entsprechend liegen die Betätigungsgriffe (31,36) oben, seitlich oder schräg an der Kupplungsstange. Als weitere Alternative kann bei der Sicherungsvorrichtung (10) der Hemmstift (22) auch weggelassen werden, wodurch die Stellfeder (23) direkt auf den Lagerbolzen (39) einwirkt.

Fig. 13 - 21 zeigen verschiedene weitere Ausführungsformen, bei denen die Führung der Kupplungsstangen (2) im Aufnahmerohr (3) und die Ausbildung des Betätigungsgriffs (31) beziehungsweise Schwenkgriffs (36) variiert ist.

Zur besseren Führung des vorderen Stangenendes (8) im Aufnahmerohr (3) ist eine quer zur Einsteckrichtung liegende Spannstange (60) vorgesehen, die sich durch das Aufnahmerohr (3) erstreckt und an beiden Enden dort gelagert ist. Die Spannstange (60) ist im bevorzugten Ausführungsbeispiel gemäß der Draufsicht von Fig. 13 vertikal angeordnet. Sie kann aber auch horizontal liegen oder irgendeine andere Schrägstellung einnehmen. Fig. 14 zeigt die Stirnansicht gemäß Pfeil XIV von Fig. 13. Die Spannstange (60) ist vorzugsweise etwa in der Mitte der Aufnahmerohrlänge und in Querrichtung etwas distanziert vom Rohrmantel angeordnet.

Die Spannstange (60) wirkt zusammen mit einer Ausnehmung (61) am vorderen Stangenende (8), die mit einer Anlaufschräge (62) versehen ist. Beim Einstecken gleitet das Stangenende (8) mit der Anlaufschräge (62) auf der Spannstange (60) auf und wird dadurch auf der gegenüberliegenden Seite an die Wand des Aufnahmerohrs (3) gepreßt. In diesem Bereich ist das Stangenende (8) mit einer Abflachung (63) versehen. Die Abflachung wirkt wie eine Ausnehmung, es besteht hier kein Anlagekontakt mit dem Aufnahmerohr (3), so daß die angrenzenden gewölbten Bereiche des Stangenendes (8) besser mit den entsprechenden Führungsflächen (64) an der Innenwand des Aufnahmerohrs (3) zusammenwirken. Auf diese Weise ergibt sich über die doppelzentrierende Anlage eine sichere und wackelfreie Führung, die sich bei Verschleiß über den Sperrbolzen (4), die Spannstange (60) und die Anlaufschräge (62) selbsttätig nachstellt. Die Abflachung (63) kann ferner mehrfach über den Umfang des Stangenendes (8) verteilt angeordnet sein.

Es empfiehlt sich, an der Innenwand des Aufnahmerohrs (3) zwei getrennte Führungsflächen (64) vorzusehen, die durch eine Ausdrehung (65) unterbrochen sind. Ihre Trennung hat zum einen den Vorteil, daß Verschleißerscheinungen am Stangenende (8) und den Führungsflächen (64) durch häufiges Ein- und Ausstecken der Kupplungsstange (2) vermieden werden. Es könnte hierbei zu unerwünschten Verrundungen und Verschleiß der Führungsflächen kommen. Zum anderen wird die Einstecksicherheit erhöht.

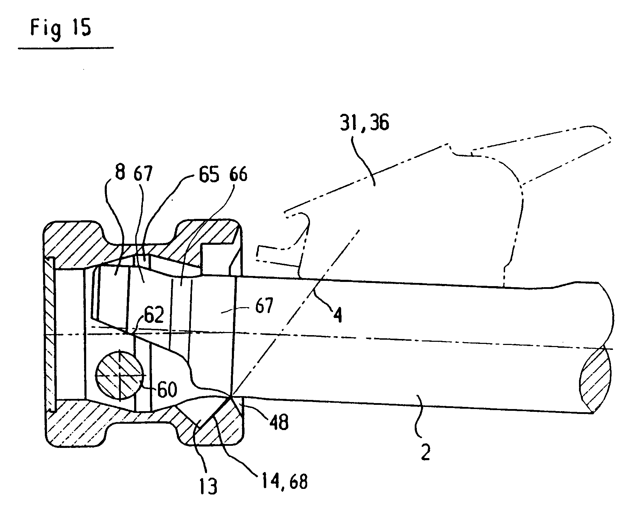

Wie Fig. 15 in einer geschnittenen Seitenansicht des Aufnahmerohrs (3) zeigt, läßt sich die Kupplungsstange (2) nur bei geradem und vollständigem Einsatz im Aufnahmerohr (3) verriegeln. Ansonsten schiebt nämlich der Sperrbolzen (4) unter seiner Federkraft die Kupplungsstange (2) selbsttätig wieder aus, wobei die Ausdrehung (65) ein Eintauchen des vorderen Stangenendes (8) und ein Kippen der Kupplungsstange (2) ermöglicht. Dem gleichen Zweck dient auch eine umlaufende Einschnürung (66) am vorderen Stangenende (8). Sie weist vorzugsweise schräge Übergänge (67) zum Stangenmantel auf und erleichtert das Herausgleiten des Stangenendes (8) aus dem Aufnahmerohr (3). Die schrägen Übergänge (67) wirken dabei vorteilhaft mit der rohrseitigen Anschrägung (48) zusammen. Eine fehlerhaft angesetzte Anhängerkupplung (1) macht sich hierdurch sofort bemerkbar und nicht erst während der Fahrt mit angekuppeltem Anhänger.

Zur Optimierung empfiehlt es sich, die Ausnehmung (61) auf der Seite der Kupplungsstange (2) anzuordnen, auf der auch die Austrittsöffnung (7) des Sperrbolzens (4) liegt. Die Ausnehmung (61) bzw. der schräge Übergang (67) schließen sich dann unmittelbar an diese Austrittsöffnung (7) an. Dementsprechend befinden sich auch die Spannstange (60) und die Rastöffnung (13) auf der gleichen Seite des Aufnahmerohrs (3). In Fig. 15 - 19 sind verschiedene Variationen der Abflachung (63) am Stangenende (8) und der Führungsflächen (64) am Aufnahmerohr (3) dargestellt. Die Einschnürung (66) am vorderen Stangenende (8) kann ferner noch zum Trennen der stangenseitigen Führungsflächen dienen.

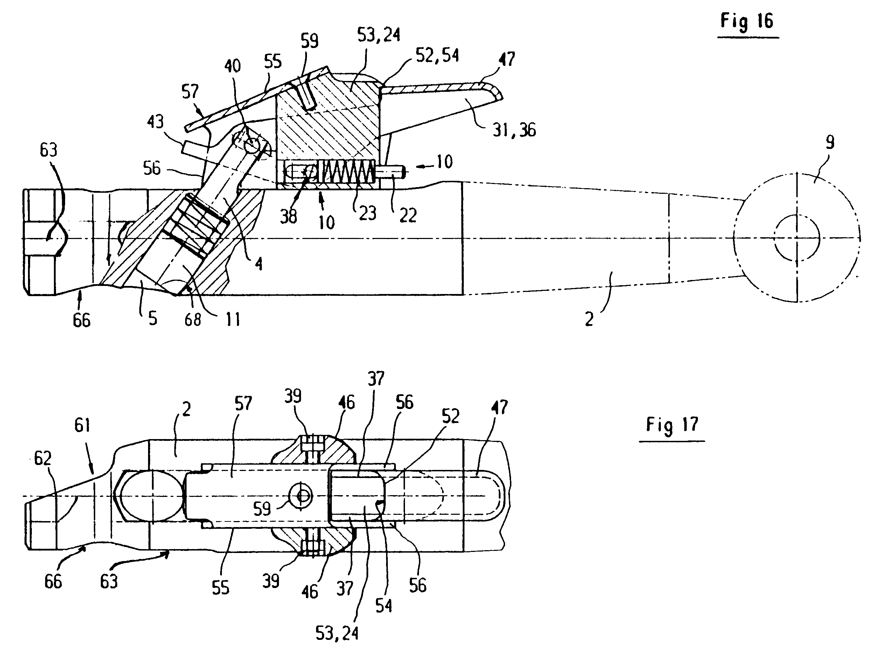

Die weiteren Variationen betreffen die Ausbildung der Betätigungsvorrichtung für den Sperrbolzen (4). Wie in Fig. 16 und 17 in Draufsicht und Seitenansicht näher dargestellt, ist das Gehäuse (24) der Sicherheitsvorrichtung (10) nach oben zur Bildung einer Stützplatte (53) verlängert. Die Stützplatte (53) wird von den beiden Armen (37) des Schwenkgriffs (36) umgriffen. Diese Anordnung ist dann noch von einem U-förmigen Schutzgehäuse (55) umfaßt. Dessen schräg zum vorderen Stangenende (8) abfallende Deckplatte (57) ist auf der Stützplatte (53) befestigt, beispielsweise mittels einer Schraube (59). Die Deckplatte (57) reicht am vorderen Ende bis knapp zu der Sicherungsnase (43) des Schwenkgriffs (36) und deckt den Sperrbolzen (4) und die Gelenkanordnung (40) nach außen ab. Seitlich ist die Anordung von den Seitenwänden (56) des Schutzgehäuses (55) abgedeckt.

Zur Verbesserung und Erleichterung der Kupplungshandhabung kann der Schwenkgriff (36) in geöffneter Stellung entsprechend Fig. 16 arretiert werden. Hierzu wirkt der Plattenrand (52) der Griffplatte (47) mit der Stützplatte (53) zusammen. Zum Abnehmen der Anhängerkupplung (1) wird zunächst der Schwenkgriff (36), gegebenenfalls mittels der Griffhülsen (46), aus der in Fig. 13 gezeigten Stellung und dem Eingriff mit der rohrseitigen Ausnehmung (44) zurückgezogen. Anschließend wird er zur Kupplungsstange (2) hin gedrückt, wobei er in der vorbeschriebenen Weise den Sperrbolzen (4) anzieht. Hierbei gleitet die Griffplatte (47) hinter die Stützplatte (53). Der Plattenrand (52) liegt dann unter Bildung einer Raste (54) an der Rückwand der Stützplatte (53) an und wird dort durch die Stellfeder (23) der Sicherungsvorrichtung (10) festgehalten.

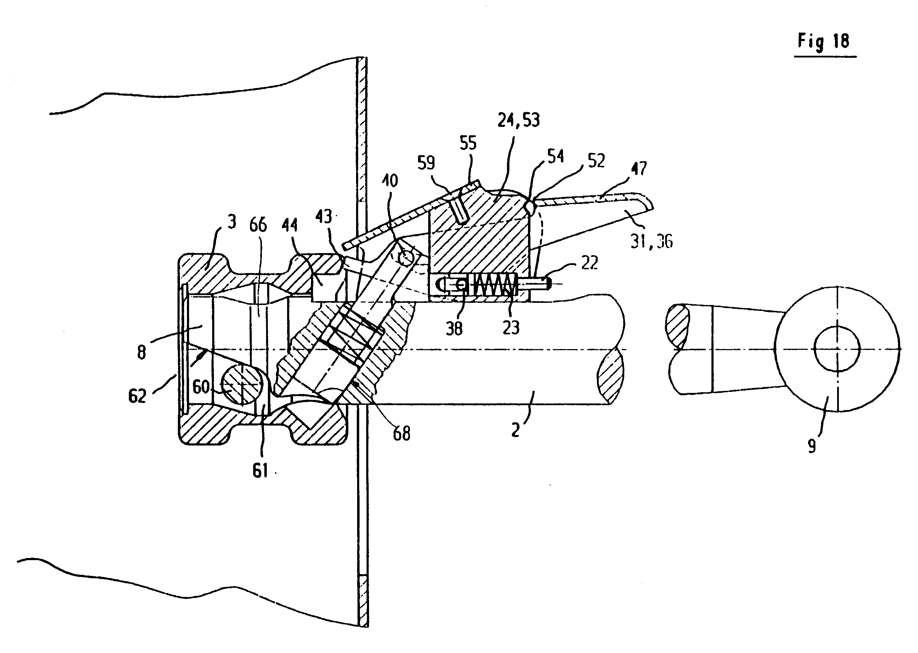

Aus dieser verriegelten Spannstellung kann sich der Schwenkgriff (36) nicht selbsttätig lösen. Erst wenn die Anhängerkupplung entsprechend Fig. 18 angesetzt wird, stößt die Sicherungsnase (43) gegen eine Anlaufschräge am Aufnahmerohr (3), wodurch der Schwenkgriff (36) unter Lösung der Raststellung zurückgeschoben und dann unter Einwirkung der Feder (17) am Sperrbolzen (4) in die Stellung gemäß Fig. 13 geschwenkt wird. In dieser Stellung schließt die Griffplatte (47) an die Deckplatte (57) des Schutzgehäuses (55) an.

Die Raststellung von Fig. 16 kann, falls erwünscht, auch von Hand gelöst werden, indem die in der zugehörigen Seitenansicht von Fig. 17 dargestellten Griffhülsen (46) gegen die Kraft der Stellfeder (23) zurückgezogen werden. Der Schwenkgriff (36) wird dabei über die Lagerbolzen (39) mitgenommen und von der Raste (54) gelöst.

Um die erforderlichen Handkräfte zum Abnehmen der Anhängerkupplung (1) zu verringern, besitzt der Schwenkgriff (36) zwei Drehpunkte (38,50), die in unterschiedlichen Schwenkstellungen wirksam werden. Der eine Drehpunkt (50) liegt an der Unterseite des Schwenkhebels (36) und zwar vor dem Schwenklager (38) bzw. Lagerbolzen (39), um den der Schwenkgriff (36) normalerweise dreht. Hierzu ist die Unterkante des Schwenkgriffs (36) im hinteren Bereich mit einer nach oben laufenden Schräge (51) versehen. Am Übergang der Schräge (51) in die horizontale Unterkante entsteht der Drehpunkt (50).

Für den Lagerbolzen (39) hat der Schwenkgriff (36) ein im wesentlichen vertikal ausgerichtetes Langloch (49). Der Schwenkgriff (36) kann hierdurch ein kleines Stück gegenüber dem Lagerbolzen (39) auf- und abgleiten.

Zum Lösen der Kupplungsstange (2) aus der in Fig. 13 gezeigten Einsteckstellung wird der Schwenkgriff (36) zur Stange gedrückt, wobei er um den Drehpunkt (50) schwenkt. Es ergibt sich hierdurch ein größerer Hebelarm und damit eine geringere erforderliche Handkraft als in den vorbeschriebenen Ausführungsformen, in denen der Schwenkgriff (36) um den Lagerbolzen (39) drehte. In der Ausgangsstellung von Fig. 13 befindet sich der Lagerbolzen (39) am unteren Ende des Langlochs (49) und ist somit als Drehpunkt noch nicht wirksam.

Erst in der weiteren Drehbewegung des Schwenkgriffs (36) kommt dieser durch die Schräge (51) nach unten, wobei sich das obere Ende des Langlochs (49) dem Lagerbolzen (39) nähert. Sobald es auf dem Lagerbolzen (39) aufsitzt, wird dieser als Drehpunkt aktiv. Fig. 16 zeigt diese Endstellung.

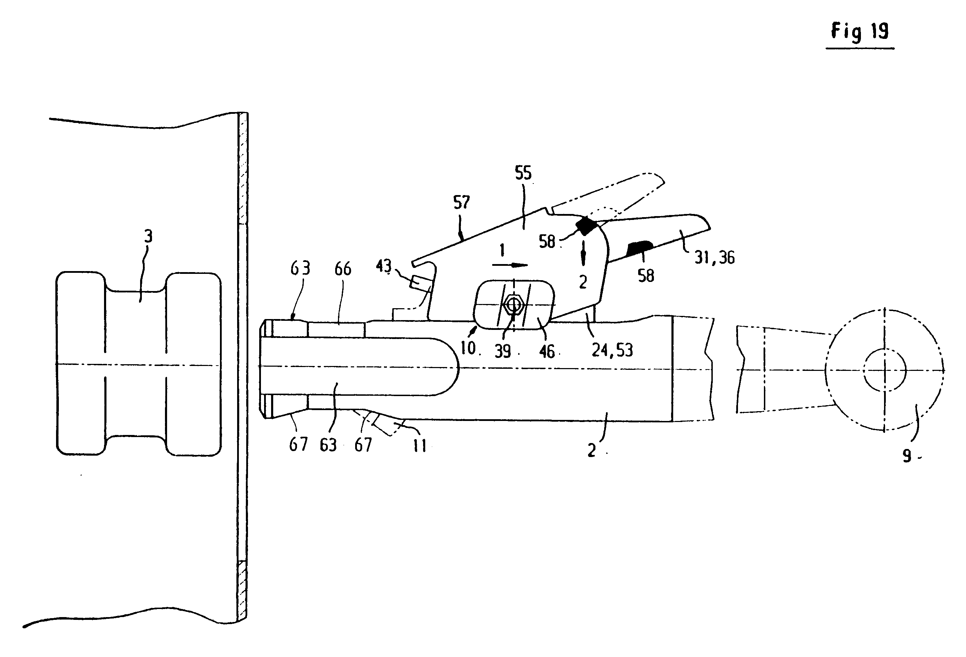

Wie Fig. 19 verdeutlicht, können zur Erhöhung der Bedienungssicherheit farblich oder formmäßig abgesetzte Markierungen (58) am Schutzgehäuse (55) und am Schwenkgriff (36) vorgesehen sein. Bei gelöster Kupplungsstange (2) und gespanntem Schwenkgriff (36) sind die Markierungen (58) voneinander distanziert. Erst wenn die Kupplungsstange (2) korrekt im Aufnahmerohr (3) eingesetzt ist und der Schwenkgriff (36) seine gestrichelt dargestellte obere Enstellung einnimmt, kommen die beiden Markierungen (58) miteinander zur Deckung und signalisieren den korrekten Ansatz der Kupplungsstange (2). Diese Stellung wird außerdem durch die fluchtende Lage der Griffplatte (47) und der Deckplatte (57) signalisiert.

### STÜCKLISTE

- 1: Anhängerkupplung
- 2: Kupplungsstange
- 3: Aufnahmerohr
- 4: Sperrbolzen
- 5: Bohrung
- 6: Eintrittsöffnung
- 7: Austrittsöffnung
- 8: Stangenende
- 9: Kupplungskugel
- 10: Sicherungsvorrichtung
- 11: Bolzenkopf
- 12: Kegelspitze
- 13: Rastöffnung
- 14: Wand
- 15: Schraubgewinde
- 16: Bolzenschaft
- 17: Feder
- 18: Kragen
- 19: Mantel
- 20: Deckfläche
- 21: Ansatz
- 22: Hemmstift
- 23: Stellfeder
- 24: Gehäuse
- 25: Losdrehrichtung
- 26: Verdrehsicherung
- 27: Nut
- 28: Führungsstift
- 29: Anlagefläche
- 30: Fase
- 31: Betätigungsgriff
- 32: Zugfahrzeug
- 33: Exzenterbolzen
- 34: Führungsnut
- 35: Stift
- 36: Betätigungsgriff, Schwenkgriff
- 37: Arm
- 38: Schwenklager
- 39: Lagerbolzen
- 40: Gelenk
- 41: Gelenkbolzen
- 42: Langloch
- 43: Sicherungsnase
- 44: Ausnehmung
- 45: Platte
- 46: Griffhülse
- 47: Griffplatte
- 48: Anschrägung
- 49: Langloch
- 50: Drehpunkt
- 51: Schräge
- 52: Plattenrand
- 53: Stützplatte
- 54: Raste
- 55: Schutzgehäuse
- 56: Seitenwand
- 57: Deckplatte
- 58: Markierung
- 59: Schraube
- 60: Spannstange
- 61: Ausnehmung
- 62: Anlaufschräge
- 63: Abflachung
- 64: Führungsfläche
- 65: Ausdrehung
- 66: Einschnürung
- 67: schräger Übergang
- 68: einseitige Anschrägung

## Patentansprüche

1. Abnehmbare Anhängerkupplung mit einem Aufnahmerohr am Zugfahrzeug und einer lösbaren Kupplungsstange, wobei die Kupplungsstange einen beweglichen Sperrbolzen mit einem Betätigungsgriff aufweist, der die Kupplungsstange schräg durchsetzt und in Einsteckstellung formschlüssig in eine Rastöffnung im Aufnahmerohr greift, dadurch **gekennzeichnet**, daß eine Sicherungsvorrichtung (10) für den Sperrbolzen (4) vorgesehen ist.

2. Abnehmbare Anhängerkupplung nach Anspruch 1, dadurch **gekennzeichnet**, daß die Eintrittsöffnung (6) des Sperrbolzens (4) in die Kupplungsstange (2) soweit vom vorderen Stangenende (8) zurückversetzt ist, daß sie in Einsteckstellung außerhalb des Aufnahmerohrs (3) liegt.

3. Abnehmbare Anhängerkupplung nach Anspruch 1 oder 2, dadurch **gekennzeichnet**, daß der Sperrbolzen (4) in der Kupplungsstange (2) über ein Schraubgewinde (15) oder eine Gleitlagerung mit einer Feder (17) längsbeweglich geführt ist.

4. Abnehmbare Anhängerkupplung nach Anspruch 3, dadurch **gekennzeichnet**, daß der Sperrbolzen (4) einen Bolzenkopf (11) mit einer Kegelspitze (12), einer einseitigen Anschrägung (68) oder einem Exzenterbolzen (33) aufweist.

5. Abnehmbare Anhängerkupplung nach Anspruch 1 oder einem der folgenden, dadurch **gekennzeichnet**, daß das Aufnahmerohr (3) am stirnseitigen Rand und zumindest im Bereich der Rastöffnung (13) eine Anschrägung (48) aufweist.

6. Abnehmbare Anhängerkupplung nach Anspruch 1 oder einem der folgenden, dadurch **gekennzeichnet**, daß der Betätigungsgriff (36) über ein Schwenklager (38) mit der Kupplungsstange (2) und über ein Gelenk (40) mit dem Sperrbolzen (4) verbunden ist.

7. Abnehmbare Anhängerkupplung nach Anspruch 6, dadurch **gekennzeichnet**, daß der Betätigungsgriff (36) gegenüber der Kupplungsstange (2) und dem Sperrbolzen (4) längsverschieblich gelagert ist, wobei das Schwenklager (38) und das Gelenk (40) Langlöcher (42) aufweisen.

8. Abnehmbare Anhängerkupplung nach Anspruch 6 oder 7, dadurch **gekennzeichnet**, daß der Betätigungsgriff (36) eine Sicherungsnase (43) aufweist, die in Einsteckstellung in eine Ausnehmung (44) am Aufnahmerohr (3) greift.

9. Abnehmbare Anhängerkupplung nach Anspruch 1 oder einem der folgenden, dadurch **gekennzeichnet**, daß die Sicherungsvorrichtung (10) ein stangenfestes Gehäuse (24) mit einer längs der Kupplungsstange (2) gerichteten Stellfeder (23) aufweist, die direkt oder mittelbar über einen Hemmstift (22) bewegungshemmend auf den Sperrbolzen (4) oder den Schwenkgriff (36) einwirkt.

10. Abnehmbare Anhängerkupplung nach Anspruch 9, dadurch **gekennzeichnet**, daß die Stellfeder (23) oder der Hemmstift (22) am Lagerbolzen (39) des Schwenkgriffs (36) angreifen, der das Gehäuse (24) durchsetzt und in seitlichen Langlöchern (42) in Stangenlängsrichtung beweglich geführt ist.

11. Abnehmbare Anhängerkupplung nach Anspruch 1 oder einem der folgenden, dadurch **gekennzeichnet**, daß der Schwenkgriff (36) zur Sicherung der Spannstellung des Sperrbolzens (4) mit einer Raste (54) an einer Stützplatte (53) in Eingriff tritt.

12. Abnehmbare Anhängerkupplung nach Anspruch 11, dadurch **gekennzeichnet**, daß der Schwenkgriff (36) und die Stützplatte (53) oder ein umgebendes Schutzgehäuse (55) mit Markierungen (58) versehen sind, die den korrekten Einsatz der Kupplungsstange (2) im Aufnahmerohr (3) signalisieren.

13. Abnehmbare Anhängerkupplung nach Anspruch 1 oder einem der folgenden, dadurch **gekennzeichnet**, daß im Aufnahmerohr (3) eine querliegende Spannstange (60) angeordnet ist, und daß das vordere Stangenende (8) eine Ausnehmung (61) mit einer Anlaufschräge (62) aufweist, die beim Einsetzen der Kupplungsstange (2) auf der Spannnstange (60) aufgleitet.

14. Abnehmbare Anhängerkupplung nach Anspruch 13, dadurch **gekennzeichnet**, daß die Spannstange (60) in Mantelnähe und etwa in der Mitte der Aufnahmerohrlänge angeordnet ist.

15. Abnehmbare Anhängerkupplung nach Anspruch 13 oder 14, dadurch **gekennzeichnet**, daß die Kupplungsstange (2) zumindest auf der der Anlaufschräge (62) gegenüberliegenden Seite am Mantel eine Abflachung (63) aufweist.

16. Abnehmbare Anhängerkupplung nach Anspruch 1 oder einem der folgenden, dadurch **gekennzeichnet**, daß das Aufnahmerohr (3) zwei durch eine Ausdrehung (65) in Längsrichtung voneinander distanzierte Führungsflächen (64) aufweist.

17. Abnehmbare Anhängerkupplung nach Anspruch 1 oder einem der folgenden, dadurch **gekennzeichnet**, daß das vordere Stangenende (8) eine umlaufende Einschnürung (66) mit schrägen Übergängen (67) aufweist.

18. Abnehmbare Anhängerkupplung nach Anspruch 1 oder einem der folgenden, dadurch **gekennzeichnet**, daß die Kupplungsstange (2) eine im wesentlichen zylindrische Form besitzt und am vorderen Stangenende (7) eine Fase (30) aufweist.

19. Abnehmbare Anhängerkupplung nach Anspruch 1 oder einem der folgenden, dadurch **gekennzeichnet**, daß der Sperrbolzen (4) die Kupplungsstange (4) in einem Winkel von 55° durchsetzt.

## Claims

1. Removable trailer coupling having a receiving tube on the tractor vehicle and a detachable coupling rod, the coupling rod having a movable locking pin with an actuating handle which passes obliquely through the coupling rod and engages in the inserted position with form fit in a latching opening in the receiving tube, characterized in that a securing apparatus (10) is provided for the locking pin (4).

2. Removable trailer coupling according to Claim 1, characterized in that the opening (6) for entry of the locking pin (4) into the coupling rod (2) is set back from the front rod end (8) far enough for it to lie outside the receiving tube (3) in the inserted position.

3. Removable trailer coupling according to Claim 1 or 2, characterized in that the locking pin (4) is guided longitudinally movably in the coupling rod (2) by way of a screw thread (15) or a slide bearing having a spring (17).

4. Removable trailer coupling according to Claim 3, characterized in that the locking pin (4) has a pin head (11) with a conical tip (12), a one-sided bevel (68) or an eccentric pin (33).

5. Removable trailer coupling according to Claim 1 or one of the subsequent claims, characterized in that the receiving tube (3) has at its end edge and at least in the region of the latching opening (13) a bevel (48).

6. Removable trailer coupling according to Claim 1 or one of the subsequent claims, characterized in that the actuating handle (36) is connected by way of a pivot bearing (38) to the coupling rod (2) and by way of a joint (40) to the locking pin (4).

7. Removable trailer coupling according to Claim 6, characterized in that the actuating handle (36) is mounted longitudinally displaceably with respect to the coupling rod (2) and the locking pin (4), the pivot bearing (38) and the joint (40) having slots (42).

8. Removable trailer coupling according to Claim 6 or 7, characterized in that the actuating handle (36) has a securing lug (43) which engages in the inserted position in a cutout (44) on the receiving tube (3).

9. Removable trailer coupling according to Claim 1 or one of the subsequent claims, characterized in that the securing apparatus (10) has a housing (24) which is fixed to the rod and has an adjusting spring (23) which is directed longitudinally of the coupling rod (2) and acts on the locking pin (4) or the pivotal handle (36) in a manner blocking movement, directly or indirectly by way of a blocking peg (22).

10. Removable trailer coupling according to Claim 9, characterized in that the adjusting spring (23) or the blocking peg (22) bear against the bearing pin (39) of the pivotal handle (36), this bearing pin (39) passing through the housing (24) and being guided movably in lateral slots (42) in the longitudinal direction of the rod.

11. Removable trailer coupling according to Claim 1 or one of the subsequent claims, characterized in that the pivotal handle (36) for securing the clamping position of the locking pin (4) comes into engagement with a latch (54) on a support plate (53).

12. Removable trailer coupling according to Claim 11, characterized in that the pivotal handle (36) and the support plate (53) or a surrounding protective housing (55) are provided with markings (58) which indicate correct insertion of the coupling rod (2) in the receiving tube (3).

13. Removable trailer coupling according to Claim 1 or one of the subsequent claims, characterized in that a transverse clamping rod (60) is arranged in the receiving tube (3), and in that the front rod end (8) has a cutout (61) with a ramp surface (62) which slides on the clamping rod (60) when the coupling rod (2) is inserted.

14. Removable trailer coupling according to Claim 13, characterized in that the clamping rod (60) is arranged in the vicinity of the casing and approximately in the centre of the length of the receiving tube.

15. Removable trailer coupling according to Claim 13 or 14, characterized in that the coupling rod (2) has, at least on the side opposite the ramp surface (62), a flattened portion (63) on the casing.

16. Removable trailer coupling according to Claim 1 or one of the subsequent claims, characterized in that the receiving tube (3) has two guide faces (64) distanced from one another in the longitudinal direction by a lathed-out portion (65).

17. Removable trailer coupling according to Claim 1 or one of the subsequent claims, characterized in that the front rod end (8) has a peripheral narrowed portion (66) with oblique transition portions (67).

18. Removable trailer coupling according to Claim 1 or one of the subsequent claims, characterized in that the coupling rod (2) has a substantially cylindrical shape and has a chamfer (30) at the front rod end (7).

19. Removable trailer coupling according to Claim 1 or one of the subsequent claims, characterized in that the locking pin (4) passes through the coupling rod (4) at an angle of 55°.

## Revendications

1. Attelage de remorque démontable comportant un tube de réception sur le véhicule tracteur et une barre d'accouplement libérable, la barre d'accouplement comportant un axe de blocage mobile muni d'une poignée d'actionnement, qui traverse obliquement la barre d'accouplement et qui, en position enfilée, pénètre, avec complémentarité de forme, dans une ouverture d'encliquetage située dans le tube de réception, caractérisé en ce qu'un dispositif de sécurité est prévu pour l'axe de blocage (4).

2. Attelage de remorque démontable selon la revendication 1, caractérisé en ce que l'ouverture d'entrée (6) de l'axe de blocage (4) pratiquée dans la barre d'accouplement (2) est si en retrait de l'extrémité avant (8) de la barre qu'elle est, an position enfilée, en dehors du tube de réception (3).

3. Attelage de remorque démontable selon la revendication 1 ou 2, caractérisé en ce que l'axe de blocage (4) est guidé, avec possibilité de déplacement longitudinal, dans la barre d'accouplement (2) au moyen d'un filetage (15) ou d'un palier lisse comportant un ressort (17).

4. Attelage de remorque démontable selon la revendication 3, caractérisé en ce que l'axe de blocage (4) comporte une tête munie d'une partie en pointe conique (12), d'un biseau (68) d'un seul côté ou d'un axe (33) à excentrique.

5. Attelage de remorque démontable selon la revendication 1 ou l'une des revendications suivantes, caractérisé en ce que le tube de réception (3) comporte un biseau (48) du côté frontal et au moins dans la zone de l'ouverture d'encliquetage (13).

6. Attelage de remorque démontable selon la revendication 1 ou l'une des revendications suivantes, caractérisé en ce que la poignée d'actionnement (36) est reliée par un palier de pivotement (38) à la barre d'accouplement (2) et par une articulation (40) à l'axe de blocage (4).

7. Attelage de remorque démontable selon la revendication 6, caractérisé en ce que la poignée d'actionnement (36) est montée de façon à pouvoir être déplacée dans le sens longitudinal par rapport à la barre d'accouplement (2) et à l'axe de blocage (4), le palier de pivotement (38) et l'articulation (40) ayant à cet effet des boutonnières (42).

8. Attelage de remorque démontable selon la revendication 6 ou 7, caractérisé en ce que la poignée d'actionnement (36) comporte un bec (43) de sécurité qui, en position enfilée, pénètre dans un évidement (44) du tube de réception (3).

9. Attelage de remorque démontable selon la revendication 1 ou l'une des revendications suivantes, caractérisé en ce que le dispositif de sécurité (10) comporte un logement (24) solidaire de la barre et comportant un ressort de réglage, qui est dirigé dans le sens longitudinal de la barre d'accouplement (2), qui agit directement ou indirectement, par une tige de blocage (22), sur l'axe de blocage (4) ou sur la poignée pivotante (36) en en empêchant le déplacement.

10. Attelage de remorque démontable selon la revendication 9, caractérisé en ce que le ressort de réglage (23) ou la tige de blocage (22) attaquent l'axe de montage (39) de la poignée pivotante (36) qui traverse le logement (24) et qui est guidée en pouvant être déplacée dans les boutonnières latérales (42), dans le sens longitudinal de la barre.

11. Attelage de remorque démontable selon la revendication 1 ou l'une des revendications suivantes, caractérisé en ce que la poignée pivotante (36) se met en prise avec un cliquet (54) situé sur une plaque d'appui (53) pour assurer le blocage de l'axe de blocage (4).

12. Attelage de remorque démontable selon la revendication 11, caractérisé en ce que la poignée pivotante (36) et la plaque d'appui (53) ou une enveloppe de protection (55) qui l'entoure sont munies de repères (58) qui signalent la mise en place correcte de la barre d'accouplement dans le tube de réception (3).

13. Attelage de remorque démontable selon la revendication 1 ou l'une des revendications suivantes, caractérisé en ce qu'une tige de blocage (60) est montée transversalement dans le tube de réception et en ce que l'extrémité avant de la tige (8), comporte un évidement (61) munie d'une rampe d'accès (62) qui glisse sur la tige de blocage (60) lors de la mise en place de la barre d'accouplement (2).

14. Attelage de remorque démontable selon la revendication 13, caractérisé en ce que la tige de blocage (60) est disposée à proximité de la surface latérale et à peu près au milieu de la longueur du tube de réception.

15. Attelage de remorque démontable selon la revendication 13 ou 14, caractérisé en ce que la barre d'accouplement (2) comporte un méplat (63), au moins sur le côté de la surface latérale opposé à la rampe d'accès (62).

16. Attelage de remorque démontable selon la revendication 1 ou l'une des revendications suivantes, caractérisé en ce que le tube-de réception (3) comporte deux surfaces de guidage (64) séparées l'une de l'autre dans le sens longitudinal par un alésage (65).

17. Attelage de remorque démontable selon la revendication 1 ou l'une des revendications suivantes, caractérisé en ce que l'extrémité avant (8) de la tige comporte un rétrécissement (66) périphérique, comportant des zones de transition (67) obliques.

18. Attelage de remorque démontable selon la revendication 1 ou l'une des revendications suivantes, caractérisé en ce que la barre d'accouplement (2) a une forme sensiblement cylindrique et comporte un chanfrein (30) à son extrémité avant (7).

19. Attelage de remorque démontable selon la revendication 1 ou l'une des revendications suivantes, caractérisé en ce que l'axe de de blocage (4) traverse la barre d'accouplement (2) sous un angle de 55°.
